# EUROPEAN PATENT SPECIFICATION

(11) **EP 3 548 271 B1**
(45) Date of publication and mention of the grant of the patent: **20.01.2021**
(21) Application number: 17817283.9
(22) Date of filing: 30.11.2017
(51) Int. Cl.: B32B 5/02, B27K 3/02, B27K 5/00, B32B 7/12, B32B 15/14, B32B 15/20, B32B 21/10, B32B 21/14, B27K 3/15, B27K 3/26, B27K 3/20, B27K 3/16

(54) **FIRE RETARDANT WOOD VENEER LAMINATE**
FEUERHEMMENDES HOLZFURNIERLAMINAT
STRATIFIÉ IGNIFUGE EN BOIS DE PLACAGE

(30) Priority: 02.12.2016 NL 2017910
(43) Date of publication of application: 09.10.2019
(73) Proprietor: Wood-Products B.V., 7137 HB Lievelde (NL)
(72) Inventor: NIENHUIS, Marcel Hendricus Maria, 7137 HB Lievelde (NL)
(74) Representative: EP&C
(86) International application number: PCT/NL2017/050799
(87) International publication number: WO 2018/101825

(56) References cited:
- WO-A1-88/01558
- WO-A1-2015/176093
- CA-A- 976 813
- CN-A- 105 014 753
- DE-U1-202013 100 186
- US-A- 3 950 577

## Description

The present invention relates to a method for producing a fire retardant wood veneer laminate. The laminate has an upper side and a bottom side. The laminate has a thickness of at most 0.9 mm. A wood veneer laminate having such a thickness is in particular suitable to be used for sheet facing metal profiles.

The laminate comprises a wood veneer. The wood veneer forms an upper layer of the laminate. Further, the laminate comprises a backing layer which forms a lower layer of the laminate for supporting the wood veneer. The backing layer is fixed to the wood veneer by a laminating process.

CN102490220A discloses a method for preparing an anti-flaming mothproof natural veneer decorative panel plate. A wood fire retardant treatment solution is dissolved in demineralised water to obtain a processing solution for a primary treatment of the veneer. A vacuum pressure method is used to soak an air dried thin veneer panel plate in the processing solution for a certain time period. After soaking the veneer panel plate with the solution, the veneer panel plate is dried. Subsequently, a glue is equally distributed over the veneer panel to laminate the veneer panel and a single base plate layer together to obtain an anti-flaming mothproof natural veneer overlay decorative board.

A major drawback of this known decorative board is that the obtained decorative overlay board does not comply to requirements which define the degree in which the board should be fire retardant. Such a requirement may for example require that the board remains fire resistant over a period of about 20 minutes when exposed to an open fire. It is desired to obtain a decorative overlay board which is fire resistant and in compliance with standardised requirements, such as provided under European EN 13501-1-norm.

A further drawback of this known method is that the production of such a decorative board is carried out by a time consuming process. It is desired to obtain a fire retardant laminate by a faster production process.

US6.620.349 discloses a composition of a fire retardant agent which is suitable to increase a fire resistance of a wood product. Wood preservative compositions are disclosed which might be applied to any flammable material to decrease flammability. It is said that the compositions can be applied in any conventional manner which are well known in the wood preserving and fire retardant arts, including soaking, spraying, brushing, rolling, pressure treating, surface application, by adding the composition during manufacture.

Despite the good properties of the fire retardant agent composition, in practise, it has appeared a problem that a laminated wood product having a thickness of at most 0.9mm still remains flammable. Typically, such a thin laminated wood products include a single slice of a wood veneer layer connected to a single backing layer. Such a thin laminated wood product is generally used for sheet facing products, in particular aluminium profiles. The disclosure of US6.620.349 does not bring a satisfying solution for producing a fire retardant laminate. WO2015/176093 discloses a composite element with a core element, an adhesive layer and a cover layer. In a preparational step, the core element is soaked with a non-flammable material. The cover layer is formed by a veneer element and applied on an outer surface of the core element. The adhesive layer connects the veneer element to the core element. A drawback of this composite element is that a fire retardancy of this composite element is not satisfying.

CA976.813 discloses a method of manufacturing a fire retardant plywood employing a highfrequency electromagnetic field. A plurality of wood veneers is used to form the plywood. Before adhesive coating, assembly and lamination, the wood veneers are subjected to treatment conducted at ambient pressure in which the veneers are exposed to a highfrequency magnetic field to rapidly raise a temperature of a moisture within the wood. The veneers are then immediately immersed in a solution of fire-retardant agent. After a drying process, any access agent remaining on a surface of the veneers is removed. Then, a plurality of veneers may be laminated in a known manner involving adhesive coating, assembly and hot or cold pressing to form the plywood. Again, a drawback of this composite element is that the fire retardancy of this plywood is not satisfying.

The general object of the present invention is to at least partially eliminate the above mentioned drawbacks and/or to provide a useable alternative. More specific, it is an object of the invention to provide a wood veneer laminate and a production method to produce a fire retardant wood veneer laminate which laminate provides a satisfying fire retardancy. According to the invention, this object is achieved by a method according to claim 1. According to invention, a method for producing a fire retardant wood veneer laminate is provided.

In a step of the method, the laminate is provided. The laminate has an upper side and a bottom side. The laminate has a thickness of at most 0.9mm. The laminate has at least one upper layer and at least one lower layer.

The laminate comprises a wood veneer layer. The wood veneer layer forms the upper layer of the laminate. Further, the laminate comprises a backing layer which forms the lower layer of the laminate for supporting the wood veneer. The backing layer is fixed to the wood veneer layer by a laminating process. Preferably, the backing layer is laminated to the wood verneer layer by using a PVAC-glue (Polyvinyl acetate-glue), in particular a D4 wood glue, also called white glue. Alternatively, a PU-glue (PolyUrethane-glue), preferably a D4 PU-glue, can be used in the laminating process.

The method according to the invention provides an improvement in that the laminate having a thickness of at most 0.9mm is supplied to an impregnation station. The wording laminate means a material in which layers are laminated together to a one piece item. At the impregnation station, a fire retardant agent is impregnated into the laminate. The fire retardant agent is impregnated from the upper side of the laminate, but also from the bottom side of the laminate.

Instead of carrying out a first step of separately impregnating each layer of the laminate before laminating the layers to each other as is known in the prior art, according to the invention, already laminated layers are impregnated with a fire retardant agent.

Both sides of the wood veneer laminate are impregnated to obtain a sufficient volume of fire retardant agent into the laminate. Experimental tests revealed that laminating after separately impregnating individual layers did not result in a sufficient fire retardant laminate. When exposed to an open fire, individual layers of such a prepared laminate with separately impregnated layers still catch fire within a time period of just a few minutes. Most of the times, the backing layer first caught fire. In contrast, experimental tests revealed that when exposed to an open fire the wood veneer laminate according to the invention provides an increased resistance to catch fire.

In an embodiment of a laminate obtained by the method according to the invention, the laminate did show a remarkable fire resistance. A gas flame was directed onto the laminate which just caused a burning hole, but the laminate itself did not at all catch fire. The laminate did carbonize, but not flame. The laminate did just chart. Taking away the burning flame resulted in an extinguishing of fire. The laminate only showed blackened edges around the hole.

In comparison with a laminate which is cut or planed to a desired thickness after impregnating, it is concluded that the laminate according to the invention which already has a thickness of at most 0.9mm before impregnating is carried out obtains a sufficient deep intrusion of the fire retardant agent which provides substantive retardance or even a complete fire resistance. A thickness of the laminate is above 0.9mm prevents a sufficient deep intrusion which impairs the retardance.

In comparison with a prior art laminate produced by a method including a primary step of separately impregnating layers, it is concluded that the fire retardant laminate produced according to the method of the invention is able to contain a larger volume of fire retardant agent which appears to be a major factor in contributing to the increased fire resistance of the laminate. Another factor in decreasing flammability is that a present air volume in between the layers of the laminate is considerably decreased when first laminating before impregnating instead of first impregnating separate layers and then laminating.

The method according to the invention may provide several further advantages. A further advantage may be that the wood veneer laminate is less tending to bulge during the steps of the method. Wood veneer can be prone to warping and splitting. In particular, when using separately impregnating individual layers, a wetting step as the step of impregnating might cause the individual layers to get out of shape. According to the invention, by carrying out the impregnating step onto the laminate instead of onto separate individual layers, such problems of a bulging of layers may be reduced or even totally eliminated.

A wood veneer laminate having a thickness of at most 0.9 mm is in particular suitable to be used for sheet facing metal profiles, in particular sheet facing aluminium profiles.

Preferably, the laminate comprises only one slice of wood veneer, in particular the slice has a thickness of at most 0.6mm. Preferably, the laminate comprises a single backing layer, in particular having a thickness of at most 0.2mm. Preferably, the laminate is obtained from a laminating process in which only two layers are laminated together to form the laminate. After carrying out the method according to the invention, the laminate may be finished by varnishing, e.g. by applying a fire retardant lacquer.

In an embodiment of the method according to the invention, the method further comprises a step of sheet facing an obtained fire retardant wood veneer laminate to a metal profile. In the sheet facing step, the laminate is fixated to the metal profile. The limited thickness of the laminate of at most 0.9mm allows the laminate to be placed around relatively sharp curved edges and rounded corners of the metal profile. For example, the laminate may be fixed to a metal profile and may be bended over a radius of at least 0.5mm without forming cracks. Obtained lined metal profiles may be used as ceiling profiles, wall profiles or doorpost profiles. Such lined profiles may provide excellent fire retardant means for dressing an interior of a room of the building.

In an embodiment of the method according to the invention, the method comprises a step of supplying the wood veneer laminate to an impregnation station by unwinding the wood veneer laminate from a supply reel. The wood veneer laminate winded on the supply reel may have a width of at least 10mm till about 600mm and a length of at least 100m. After unwinding, the laminate is conveyed to the impregnation station. At the impregnation station, the laminate is impregnated with fire retardant agent. Herewith, the production method is a continuous production method instead of a batch wise production method. Advantageously, the laminate which has a limited and possibly fragile thickness can be conveniently handled by the reel. By unwinding the laminate from the supply reel, a large length of the laminate can be processed at once. Advantageously, in comparison with a batch wise process in which laminates with a short length are treated, the supply of the laminate by a supply reel allows a relatively short processing time to produce a high volume of the fire retardant wood veneer laminate.

In a further embodiment of the method according to the invention, the method further comprises a step of winding the impregnated wood veneer laminate originating from the impregnation station onto a storage reel. Herewith, the wood veneer laminate having a relative long length can be stored easily. A further advantage is that such as reeled wood veneer laminate, can be easily supplied again to the impregnation station to apply a further step of impregnating.

In an embodiment of the method according to the invention, the method comprises a first and a second step of impregnating a fire retardant agent. The second step follows in series with the first step. The first step is separately carried out with respect to the second step. After the first step of impregnating, one side of the laminate is impregnated. Then the laminate is reversed. Subsequently, the reversed laminate is supplied to the impregnation station to carry out the second step of impregnating to impregnate the opposite side of the laminate. Particulary, the second step is carried within half an hour after carrying out the first step. The time duration may allow a removal of redundant fire retardant agent, e.g. by dripping off. Preferably, the second step is carried out directly, which means without substantive operational delay, after completing the first step. Advantageously, no negative effects of drying occur within such short time duration in between the steps.

As a result of carrying out the first and second step of impregnating and the intermediate step of reversing laminate, the laminate is impregnated with fire retardant agent from both sides. Preferably, the first and second step of impregnating are successively carried out without an intermediate step of drying. Intermediate drying steps which normally consumes several minutes can be omitted in the method according to invention. Advantageously, the process of impregnating without any step of drying contributes to a faster production of wood veneer laminates.

In a preferred embodiment of the method according to invention only a single impregnation station is used. The laminate impregnated in the first step at an impregnation station is preferably impregnated in the second step at the same impregnation station. After passing the impregnation station for a first time, wherein the upper side of the laminate is impregnated, the laminate can be turned upside down and re-supplied to the same impregnation station to impregnate the bottom side of the laminate. The laminate may be conveyed by a conveyor, in particular a conveyor belt, when passing along the impregnation station. Advantageously, a storage reel receiving an upper side impregnated laminate from the impregnation station, can subsequently be used as a supply reel to supply this laminate in an upside down position to the impregnation station to impregnate the bottom side of this laminate.

In an embodiment of the method according to the invention, the step of impregnating at the impregnation station is carried out by using an impregnation station comprising a fire retardant agent reservoir, a distributing tool, like a squeegee or spray nozzle and at least one pressure roller for pressuring the agent into the laminate. The agent is applied in a liquid form. Preferably, the laminate is conveyed by a conveyor belt to pass the pressure roller to get impregnated.

In an embodiment of the method according to the invention, the method comprises a step of drying the laminate after completing all steps of impregnating. The step of drying and the laminate can be carried out to prevent superfluous liquid agent coming off the laminate. Advantageously, a subsequent drying step carried out onto an impregnated laminate may further increase a contained volume of fire retardant agent impregnated in the wood veneer laminate. Preferably, the drying step is carried out, while the impregnated laminate is wound on a reel, e.g. the storage reel. Preferably, the drying step is carried out for a duration of at most 3 hours, in particular 2 hours to prevent decolouring of the impregnated laminate.

In an embodiment of the method according to the invention, the wood veneer laminate is varnished after impregnating the laminate. In particular, the laminate is varnished after drying the impregnated laminate. Preferably, the laminate is varnished with a fire retardant lacquer.

Further, the invention relates to a fire retardant wood veneer laminate obtained by the method according to the invention.

The veneer laminate has an upper side, bottom side and a total thickness of most 0.9 mm. The laminate comprises a wood veneer layer, in which the wood veneer layer forms an upper layer of the laminate. The wood veneer layer is a raw wood veneer, which has in an initial state no backing on it and can be used with either side facing up. The laminate further comprises a backing layer for supporting the wood veneer layer. The backing layer of the laminate is fixed to the wood veneer layer. The backing layer forms a lower layer of the laminate.

The wood veneer layer is laminated to the backing layer to provide the wood veneer laminate. Preferably, a polyvinyl acetate glue, also called white glue, in particular D4 wood glue, is used to glue the wood veneer layer to the backing layer. Alternatively, a PU-glue (PolyUrethane-glue), preferably a D4 PU-glue, can be used in the laminating process. Preferably, a biodegradable glue is applied to laminate the backing layer to a raw wood veneer layer. The glue may be selected from the group of hide glues or so called protein glues. The laminate is subsequently subjected to at least one step of impregnation with fire retardant agent, such that both sides of the laminate are impregnated. Both sides of the laminate are impregnated with a fire retardant agent. Advantageously, by carrying out experiments, it is found that in comparison with a lamination of pre-impregnated layers, the wood veneer laminate according to invention impregnated with fire retardant agent provides an increased fire resistance. An explanation might that the increased fire resistance appears to result from a higher capacity of the laminate to contain fire retardant agent. Another factor contributing to the increased fire resistance appears to be a reduction of a present air volume in between layers of the laminate when impregnating after carrying out a laminating process. The wood veneer is made of a wood material which is preferably suitable for dressing an interior. The wood veneer material may be any kind of wood material, like oak material, or composite material like Alpi or Tabu. In particular, the wood veneer has a thickness of at most 0.6mm.

Preferably, the backing layer has a thickness of at most 0.2mm. In particular, the backing layer has a thickness of at least 0.15 mm. In particular, the wood veneer layer has a thickness of at least 0.15 mm. Herewith, the laminate has a total thickness of at least 0.3 mm which advantageously provides sufficient strength to carry out the method according to the invention and possibly other desired operational steps to obtain finally a desired laminate.

In an embodiment of the veneer laminate according to the invention, the backing layer may be a fibre-reinforced plastic, in particular a glass fiber containing material. The backing layer may be a fibreglass. Advantageously, fibreglass has a fire retardant properties. Preferably, the backing layer comprises a woven fabric including glass fiber. Advantageously, the open structure of the fabric contributes to an intrusion of an impregnation solution with a fire retardant agent.

In an embodiment of the method according to the invention, the backing layer is made of a biodegradable material, in particular a natural material. Advantageously, the laminate is produced environmental friendly without chemicals and durable. Particularly, the backing layer comprises a natural fiber comprising at least one natural fiber selected from the group consisting of jute, hemp, cotton, coir, and combinations thereof. Advantageously, the biodegradable material of the backing material contributes to an environmental friendly laminate.

Fire retardant agents suitable to be impregnated are known from the prior art, see for example the publication US6620349 which is mentioned in the introduction. Preferably, the fire retardant agent is a biodegradable agent. The fire retardant agent may be a conventional fire retardant agent like an ammonium phosphate, aluminium sulphate, aluminium hydrate or chlorinated paraffin. In an embodiment of the method according to invention, the fire retardant agent is selected from the group of inorganic boron containing compounds, e.g. as disclosed in US 5.612.094. In an embodiment of the method according to the invention, the fire retardant agent may be a urea-nitro based fire retardant solution, which includes a conventional fire-retardant, such as ammonium phosphate, aluminium sulphate, aluminium hydrate, chlorinated paraffins, borax or boric acid; dicyandiamide; urea nitro; a urea/formaldehyde resin polymer in water; and a melamine and acid salt catalyst activator used to catalyse the formation of a urea/formaldehyde resin, e.g. as disclosed in US 5.389.309.

In an embodiment, the fire retardant wood veneer laminate may further comprise a finishing layer which forms a top layer. The finishing layer may provide an increased wear resistance or may provide a decorative contribution. In an embodiment of the method according to the invention, the obtained fire retardant wood veneer laminate may be varnished after the at least one step of impregnating the laminate to obtain the finishing top layer. Preferably, the wood veneer laminate is varnished by a fire retardant lacquer.

In particular, the invention relates to a sheet faced metal profile, in particular an aluminium profile, provided with the wood veneer laminate according to the invention. Such a sheet faced metal profile is in particular suitable to renovate and decorate a room of a building. More in particular, the invention relates to a package comprising a set of sheet faced profiles for cladding a wall, floor or ceiling, wherein the profiles are sheet faced with the wood veneer laminate according to the invention. The sheet faced profiles may be suitable to refurbish a room, like a shopping hall etc.

Further, the invention relates to an impregnation system for impregnating a wood veneer laminate. The wood veneer laminate has a thickness of at most 0.9 mm. The impregnation system comprises a supply station for supplying the wood veneer laminate. The supply station comprises a supply reel for holding the wood veneer laminate. The impregnation system comprises a conveyor for conveying a supplied wood veneer laminate. The wood veneer laminate is supplied by unwinding the laminate from the supply reel. The impregnation station comprises an impregnating bath. By guiding the wood veneer laminate through the impregnating bath, the wood veneer laminate is impregnated. The wood veneer laminate is guided by the conveyor through the impregnating bath. The conveyor comprises at least a first and second pulley to immerse and guide the wood veneer laminate through the impregnating bath. Further, the impregnation system comprises a storage station for storing the impregnated laminate when discharged from the impregnating bath. The storage station comprises a storage reel for winding an impregnated wood veneer laminate originating from the impregnation station.

By guiding the wood veneer laminate through the impregnating bath, both the upper and bottom side of the wood veneer laminate are simultaneously impregnated. Advantageously, the wood veneer laminate may be impregnated by a single run in only one direction through the impregnating bath.

In the impregnation system according to the invention, the conveyor comprises a serpentine guidance for guiding the laminate in a serpentine manner through the impregnating bath. The serpentine guidance comprises an upper and a lower array of pulleys for guiding the laminate. The laminate runs alternately from a pulley of the upper array to a pulley of the lower array. The laminate runs alternately downwards and upwards through the impregnating bath. When passing a pulley, the laminate turns to another direction. When turning across the pulley, the laminate bends, such that an outer surface of the laminate stretches. The stretching of the laminate causes pores at the outer surface to open wider. This opening of the pores contributes to an intrusion of an impregnating solution. Advantageously, the serpentine guidance contributes to an improved absorption of impregnating solution from the impregnating bath.

Further embodiments according to the invention are defined in the dependent claims.

The invention will be explained in more detail with reference to the appended drawings. The drawings show a practical embodiment according to invention, which may not be interpreted as limiting the scope of the invention. Specific features may also be considered apart from the shown embodiment and may be taken into account in a broader context as an delimiting feature, not only for the shown embodiment but as a common feature for all embodiments falling within the scope of the appended claims, in which:
Fig. 1A shows in a schematic view successive steps of the method according to invention in which an upper side and a bottom side of a laminate are impregnated in series;
Fig. 1B shows the method according to the invention in a schematic view in which both the upper and bottom side are impregnated at the same time;
Fig. 2A shows in a schematic view an impregnation system including an impregnation station in between a supply reel for supplying the laminate and a return reel for a temporary storage and return of the laminate;
Fig. 2B shows a return movement of the laminate;
Fig.3A shows an alternative disclosure of an impregnation station including a nozzle for spraying fire retardant agent;
Fig. 3B shows an alternative disclosure of an impregnation station including a bath and conveyor for conveying a laminate through the bath;
Fig 3C. Shows an embodiment according to the invention of the impregnation station in which the conveyor includes a series of pulleys.

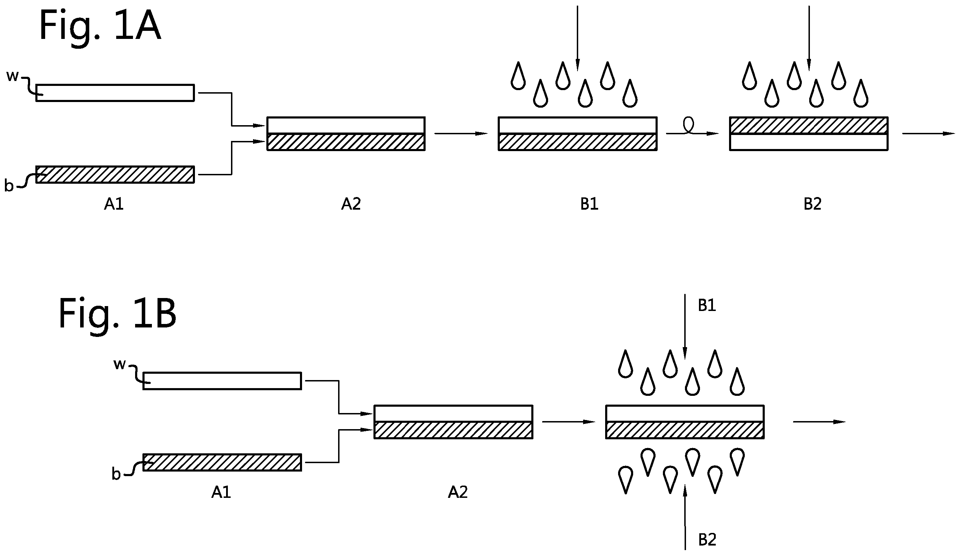

Fig. 1A shows in a schematic view successive steps of a method according to the invention. The method is a method for producing a fire retardant wood veneer laminate. In a first step of the method, the laminate is provided by carrying out a laminating process A. In the laminating process, at least a first layer and a second layer are separately supplied A1 to a lamination station A2 for laminating the at least two layers together.

The obtained laminate comprises at least two layers in which one of the layers is a wood veneer layer 'w' and one of the layers is a backing layer 'b'.

The wood veneer layer 'w' forms an upper layer of the laminate. The wood veneer layer may be a layer of raw wood material, e.g. an oak material or a composite wood material, e.g. Alpi or Tabu. The wood veneer layer has a thickness of at most 0.6 mm. Here, the wood veneer layer is not a composition of sub-layers but a single slice layer obtained from a veneer cutting process. Preferably, the wood material is cleaned from contaminations e.g. by brushing before carrying out the laminating process.

The backing layer 'b' serves to support the wood veneer layer. The backing layer is a layer of a natural material, like cotton, hemp or jute. The backing layer has a thickness of at most 0.2 mm. The backing layer is fixed to the wood veneer layer by the laminating process A and forms a lower layer of the laminate. The backing layer is fixed to the wood veneer layer by gluing. The glue to be used in the gluing step is D4 white glue, which is a PVAC glue. A total thickness of the obtained laminate is at most 0.9 mm. Herewith, the obtained laminate is a sheet facing laminate which can be used for sheet facing metal profiles, e.g. for dressing an interior of a room of a building.

The laminate has an upper side and a bottom side. The upper side is formed by the wood veneer layer 'w'. The underside is formed by the backing layer 'b'. Here, the laminate is a two layer laminate. The wood veneer laminate consist of two layers which are fixated to each other by the laminating process A.

After carrying out the laminating process, a step of impregnating a fire retardant agent B is carried out in the method according to the invention. An impregnation system is provided to carry out this step of impregnating. In this step of impregnating B both sides of the wood veneer laminate are impregnated. As illustrated in Fig. 1A, the step of impregnating B can be subdivided into a successive first and second step of impregnating B1, B2 wherein the upper side respectively the bottom side of the wood veneer laminate are successively impregnated. After the first step of impregnating B1, the laminate is turned upside down to subsequently carry out the second step of impregnating B2. As illustrated in fig. 1B, the steps of impregnating the upper and bottom side of the laminate B1, B2 can be carried out such that both the upper and bottom side of the laminate are impregnated at the same time.

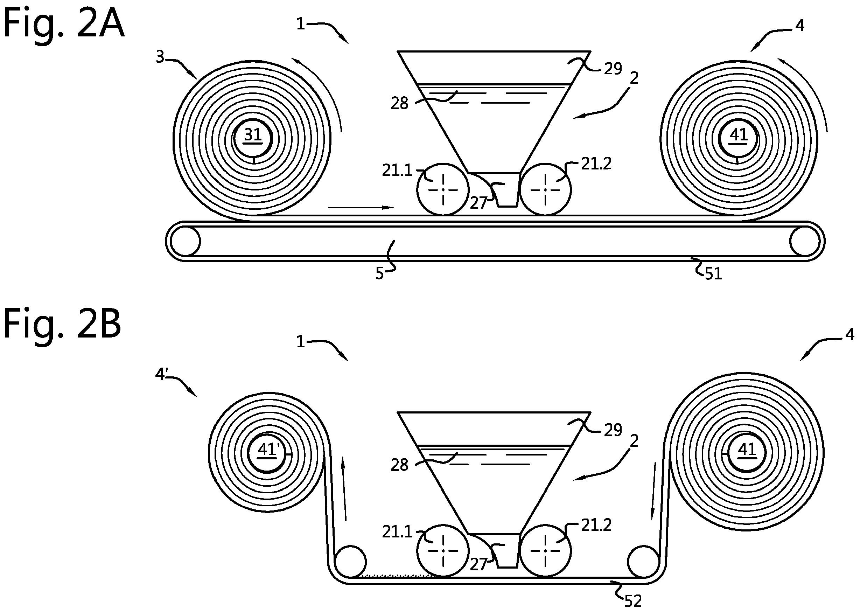

Fig. 2A schematically shows an arrangement of an impregnation system 1 which is suitable to carry out the method of the invention. The impregnation system is configured to carry out a continuous impregnating process. In contrast to a batch wise process, in the continuous process, the wood veneer laminate is conveyed at a substantially constant speed through the impregnation system.

The impregnation system 1 comprises an impregnation station 2. The wood veneer laminate is supplied to the impregnation station by unwinding the laminate from a supply station 3 including a supply reel 31. The supply reel 31 is configured to store a length of at least 100m, in particular at least 500m, of a wood veneer laminate. Particularly, the wood veneer laminate has a width of at least 10 mm and at most 600mm. The impregnation station 2 is stationary positioned along a conveyor 5 for conveying the wood veneer laminate. When driving the conveyor, the wood veneer laminate passes the impregnation station 2 in a continuous way which means without a standstill.

As illustrated in Fig. 2A, the impregnation station 2 comprises at least one pressure roller 21. Here, the impregnation station 2 comprises a first and a second pressure roller 21.1, 21.2 for pressuring the wood veneer laminate onto the conveyor 5 which is here a conveyor belt 51. The impregnation station comprises a reservoir 29 for containing an impregnation liquid 28 including a fire retardant agent. The reservoir is positioned in between the first and second pressure roller of the impregnation station. The impregnation station comprises a squeegee 27 which is positioned upstream the at least one pressure roller to supply and equally distribute the impregnation liquid 28 which is discharged from the reservoir across one side of a passing wood veneer laminate.

After leaving the impregnation station 2, the wood veneer laminate is conveyed to a storage station including a storage reel 41. The wood veneer laminate is at this stage impregnated from only one side and winded onto the storage reel 41. The storage reel serves as a buffer for temporary storing the wood veneer laminate after a first run of impregnating B1 in which the first side of the laminate is impregnated before subsequently completing the impregnating procedure by impregnating an opposite side of the laminate.

In a next step of the method as illustrated in Fig. 2B, the wood veneer laminate is unwinded from the storage reel 41 to impregnate the laminate from the opposite side. The storage reel 41 is repositioned with respect to the impregnation station 2 to re-supply the wood veneer laminate in an upside-down orientation to the impregnation station 2. Now, a second run of impregnating B2 the laminate is carried out. Subsequently, the opposite side of the laminate is impregnated when the laminate passes again through the same impregnation station 2. After leaving the impregnation station 2 for the second time, the wood veneer laminate is again winded onto a storage reel 41'. Now, after carrying out the second run, the impregnating procedure is finished and the wood veneer laminate is impregnated from both sides with a fire retardant agent to decrease flammability.

Additional steps for producing a desired wood product may be carried out onto the obtained fire retardant laminate. For example, a drying step and/or a varnishing step may be carried out to obtain a desired final product. Such a finished product is typically usable for sheet facing metal profiles, to obtain so called overlaid metal profiles. Such overlaid metal profiles are typically usable for dressing an interior of a building. The metal profiles with a wooden appearance are typically used to cover ceilings and walls in a finishing work.

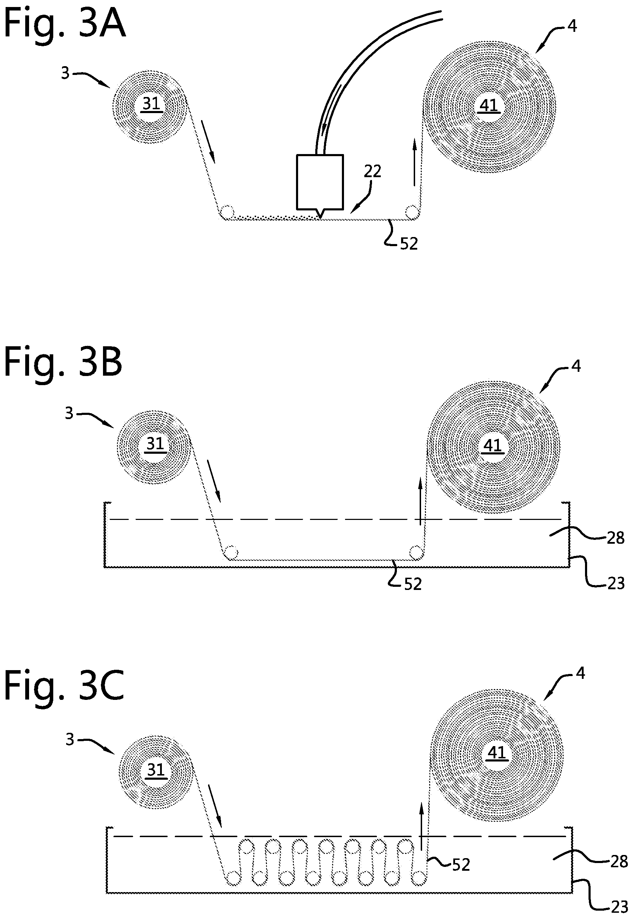

Fig. 3A shows an alternative embodiment of the impregnation station 2 comprising at least one spray nozzle 22 for spraying an impregnation liquid with a fire retardant agent onto a side of a passing laminate. Here, again, the laminate is wound on reels 3 and 4 positioned at both sides of the impregnation station 2. The conveyor 5 comprises a suspension 52 with pulleys. The laminate is suspended by the suspension 52 in between pulleys for guiding the laminate underneath the spray nozzle.

Fig. 3B shows an alternative embodiment of the impregnation station 2 comprising an impregnating bath 23. The laminate is conveyed from one reel to a next reel and guided through the impregnating bath 23. The impregnating bath 23 as a reservoir for impregnating liquid. The laminate is guided by at least a first and second pulley of the conveyor 5 which pulleys are positioned in the impregnating bath 23. The first and second pulley are immersed in impregnating liquid during operation. The laminate is guided by the pulleys in only one direction through the impregnating bath 23. In this manner, both sides of the laminate are impregnated in one single method step.

Fig. 3C shows an embodiment according to the invention wherein the laminate is conveyed through the impregnation bath 23 by a plurality of pulleys, which pulleys are arranged in series to form a serpentine guidance 53 to guide the laminate in a serpentine manner through the impregnation bath 23. The serpentine guidance 53 out of pulleys contains an upper and lower array of pulleys. The upper array of pulleys is spaced at a distance of e.g. at least 5cm from the lower array of pulleys. The serpentine guidance 53 is positioned in the impregnation bath 23. The laminate is conveyed by the serpentine guidance 53 in which the laminate runs alternately from a pulley of the upper array to a pulley of the lower array. The laminate runs alternatively downwards and upwards through the impregnating bath. The serpentine guidance 53 provides an advantage by bending the laminate multiple times when running through the guidance 53, such that the upper and a bottom surface of the laminate is stretched and exposed to improve an intrusion of a impregnation liquid with the fire retardant agent 28.

Numerous variants are possible in addition to the disclosures shown in the figures. In a variant of the illustrated disclosures of the impregnation station, the impregnation station may comprise spray nozzles to supply impregnation liquid to a surface of a passing wood veneer laminate.

Thus, according to the invention, a method is provided for producing a wood veneer laminate having a thickness of at most 0.9 mm with a strongly reduced or even nullified flammability. The wood veneer laminate is a fire retardant wood veneer laminate. The method for producing such laminate which has an upper side, a bottom side. The method comprises the steps of providing the laminate with a thickness of at most 0.9mm which laminate comprises a wood veneer layer, in which the wood veneer layer forms an upper layer of the laminate and a backing layer for supporting the wood veneer layer, in which the backing layer is fixed to the wood veneer layer and in which the backing layer forms a lower layer of the laminate. The laminate is in a next step supplied to an impregnation station for impregnating the laminate. A fire retardant agent is impregnated into the laminate from both the upper side and from the bottom side of the laminate. The obtained wood veneer laminate provides advantages in sheet facing metal profiles which profiles can be used for dressing an interior space which has to comply to fire safety requirements.

### List of reference signs:

- w: wood veneer layer
- b: backing layer
- 1: impregnation system
- 2: impregnation station
- 21: pressure roller
- 22: spray nozzle
- 23: impregnating bath
- 27: squeegee
- 28: fire retardant agent
- 3: supply station
- 31: supply reel
- 4: storage station
- 41: storage reel
- 5: conveyor
- 51: conveyor band
- 52: suspension
- 53: serpentine guidance

## Claims

1. Method for producing a fire retardant wood veneer laminate which laminate has an upper side, a bottom side and a thickness of at most 0.9 mm, in which the method comprises the steps of:
- providing a laminate with a thickness of at most 0.9mm comprising:
- a wood veneer layer, in which the wood veneer layer forms an upper layer of the laminate; and
- a backing layer for supporting the wood veneer layer, in which the backing layer is fixed to the wood veneer layer and in which the backing layer forms a lower layer of the laminate;
- supplying the laminate to an impregnation station for impregnating the laminate; and
- impregnating a fire retardant agent into the laminate from the upper side and from the bottom side of the laminate.

2. Method according to claim 1, wherein the method further comprises a step of sheet facing an obtained fire retardant wood veneer laminate to a metal profile.

3. Method according to claim 1 or 2, wherein the wood veneer layer of the laminate comprises only one slice of wood veneer.

4. Method according to any of the claims 1-3, wherein the method comprises a step of supplying the wood veneer laminate by unwinding the wood veneer laminate from a supply reel and subsequently conveying the laminate to the impregnation station.

5. Method according to any of the claims 1- 4, wherein the method comprises a first and a second step of impregnating, wherein the laminate is reversed after the first step of impregnating in which first step a first side of the laminate, i.e. the upper or bottom side, is impregnated and wherein the reversed laminate is supplied in the second step to impregnate the opposite side of the laminate.

6. Method according to claim 5, wherein the first and second step are successively carried out without an intermediate step of drying.

7. Method according to claim 5 or 6, wherein the laminate is conveyed in the first and second step to a same impregnation station.

8. Method according to any of the preceding claims, wherein the fire retardant agent is applied to the laminate by a pressure roller for pressing the fire retardant agent into the wood veneer laminate.

9. Method according to any of the preceding claims, wherein an obtained impregnated laminate is subsequently treated by a drying and/or varnishing step.

10. Wood veneer laminate obtained by carrying out the method according to any of the claims 1- 9, wherein the laminate has an upper side, bottom side and a thickness of most 0.9 mm, in which the laminate comprises:
- a wood veneer layer, in which the wood veneer layer forms an upper layer of the laminate; and
- a backing layer for supporting the wood veneer layer, in which the backing layer is fixed to the wood veneer layer by a laminating process, in which the backing layer forms a lower layer of the laminate,
wherein both the upper and the bottom side of the laminate are impregnated with a fire retardant agent after the laminating process.

11. Wood veneer laminate according to claim 10, wherein the wood veneer laminate comprises of wood veneer layer consisting of a single slice of wood veneer, which has in particular a thickness of at most 0.6 mm.

12. Wood veneer laminate according to claim 10 or 11, wherein the wood veneer laminate is produced with biodegradable materials, wherein the backing layer comprises a natural fiber selected from a group consisting of jute, hemp, cotton, coir or any combination thereof.

13. Sheet faced metal profile provided with a wood veneer laminate according to any of the claims 9-12.

14. Impregnation system for carrying out the method of claims 1-9 for impregnating a wood veneer laminate with a thickness of at most 0.9 mm comprising:
- a supply station comprising a supply reel for supplying the wood veneer laminate;
- a conveyor including a suspension for conveying a supplied wood veneer laminate;
- an impregnation station comprising an impregnating bath for impregnating the wood veneer laminate conveyed by the suspension, wherein the suspension comprises at least a first and second pulley to immerse and guide the laminate through the impregnating bath, such that both the upper and bottom side of the laminate are simultaneously impregnated;
- a storage station for storing the impregnated laminate comprising a storage reel for winding an impregnated wood veneer laminate originating from the impregnation station,
wherein the conveyor comprises a serpentine guidance including an upper and lower array of pulleys for guiding the laminate, wherein the laminate runs alternately from a pulley of the upper array to a pulley of the lower array, such that the laminate is bend multiple times during impregnation.

## Patentansprüche

1. Verfahren zur Herstellung eines flammhemmenden Holzfurnierlaminats, wobei das Laminat eine obere Seite, eine Bodenseite und eine Dicke von höchstens 0,9 mm aufweist, wobei das Verfahren die Schritte umfasst:
- Bereitstellen eines Laminats mit einer Dicke von höchstens 0,9 mm, umfassend:
- eine Holzfurnierschicht, wobei die Holzfurnierschicht eine obere Schicht des Laminats bildet; und
- eine Rückseitenschicht zum Tragen der Holzfurnierschicht, wobei die Rückseitenschicht an der Holzfurnierschicht befestigt wird, und wobei die Rückseitenschicht eine untere Schicht des Laminats bildet;
- Führen des Laminats zu einer Imprägnierstation zum Imprägnieren des Laminats; und
- Imprägnieren eines flammhemmenden Mittels in das Laminat von der oberen Seite und von der Bodenseite des Laminats.

2. Verfahren nach Anspruch 1, wobei das Verfahren ferner einen Schritt der Schichtverkleidung eines erhaltenen flammhemmenden Holzfurnierlaminats auf ein Metallprofil umfasst.

3. Verfahren nach Anspruch 1 oder 2, wobei die Holzfurnierschicht des Laminats nur eine Scheibe eines Holzfurniers umfasst.

4. Verfahren nach einem der Ansprüche 1 bis 3, wobei das Verfahren einen Schritt des Zuführens des Holzfurnierlaminats durch Abwickeln des Holzfurnierlaminats von einer Zufuhrspule und anschließenden Beförderns des Laminats zur Imprägnierstation umfasst.

5. Verfahren nach einem der Ansprüche 1 bis 4, wobei das Verfahren einen ersten und einen zweiten Schritt des Imprägnierens umfasst, wobei das Laminat nach dem ersten Schritt des Imprägnierens umgedreht wird, wobei in dem ersten Schritt eine erste Seite des Laminats, d.h. die obere Seite oder die Bodenseite, imprägniert wird, und wobei das umgedrehte Laminat in dem zweiten Schritt zugeführt wird, um die gegenüberliegende Seite des Laminats zu imprägnieren.

6. Verfahren nach Anspruch 5, wobei der erste und zweite Schritt aufeinanderfolgend ohne einen Zwischenschritt eines Trocknens durchgeführt werden.

7. Verfahren nach Anspruch 5 oder 6, wobei das Laminat in dem ersten und zweiten Schritt derselben Imprägnierstation zugeführt wird.

8. Verfahren nach einem der vorhergehenden Ansprüche, wobei das flammhemmende Mittel auf das Laminat durch eine Druckwalze zum Pressen des flammhemmenden Mittels in das Holzfurnierlaminat aufgebracht wird.

9. Verfahren nach einem der vorhergehenden Ansprüche, wobei ein erhaltenes imprägniertes Laminat anschließend durch einen Trocknungs- und/oder Lackierschritt behandelt wird.

10. Holzfurnierlaminat, welches durch Durchführen des Verfahrens nach einem der Ansprüche 1 bis 9 erhalten wird, wobei das Laminat eine obere Seite, eine Bodenseite und eine Dicke von höchstens 0,9 mm aufweist, wobei das Laminat umfasst:
- eine Holzfurnierschicht, wobei die Holzfurnierschicht eine obere Schicht des Laminats bildet; und
- eine Rückseitenschicht zum Tragen der Holzfurnierschicht, wobei die Rückseitenschicht an der Holzfurnierschicht durch einen Laminierungsprozess befestigt wird, wobei die Rückseitenschicht eine untere Schicht des Laminats bildet;
wobei sowohl die obere Seite als auch die Bodenseite des Laminats mit einem flammhemmenden Mittel nach dem Laminierungsprozess imprägniert werden.

11. Holzfurnierlaminat nach Anspruch 10, wobei das Holzfurnierlaminat eine Holzfurnierschicht umfasst, welche aus einer einzelnen Scheibe eines Holzfurniers besteht, die insbesondere eine Dicke von höchstens 0,6 mm aufweist.

12. Holzfurnierlaminat nach Anspruch 10 oder 11, wobei das Holzfurnierlaminat mit bioabbaubaren Materialien hergestellt ist, wobei die Rückseitenschicht eine Naturfaser umfasst, ausgewählt aus einer Gruppe bestehend aus Jute, Baumwolle, Kokosfasern oder einer beliebigen Kombination davon.

13. Schichtverkleidetes Metallprofil, welches mit einem Holzfurnierlaminat nach einem der Ansprüche 9 bis 12 versehen ist.

14. Imprägniersystem zur Durchführung des Verfahrens der Ansprüche 1 bis 9 zum Imprägnieren eines Holzfurnierlaminats mit einer Dicke von höchstens 0,9 mm, umfassend:
- eine Zufuhrstation, umfassend eine Zufuhrspule zum Zuführen des Holzfurnierlaminats;
- einen Förderer, der eine Aufhängung zum Befördern eines zugeführten Holzfurnierlaminats aufweist;
- eine Imprägnierstation, umfassend ein Imprägnierbad zum Imprägnieren des Holzfurnierlaminats, das von der Aufhängung befördert wird, wobei die Aufhängung mindestens eine erste und zweite Rolle umfasst, um das Laminat einzutauchen und durch das Imprägnierbad zu führen, so dass sowohl die obere Seite als auch die Bodenseite des Laminats gleichzeitig imprägniert werden;
- eine Vorratsstation zum Aufbewahren des imprägnierten Laminats, umfassend eine Vorratsspule zum Aufwickeln eines imprägnierten Holzfurnierlaminats, das von der Imprägnierstation kommt,
wobei der Förderer eine Serpentinenführung umfasst, die eine obere und untere Anordnung von Rollen zum Führen des Laminats aufweist, wobei das Laminat abwechselnd von einer Rolle der oberen Anordnung zu einer Rolle der unteren Anordnung läuft, so dass das Laminat während des Imprägnierens mehrmals gebogen wird.

## Revendications

1. Procédé de production d'un stratifié de placage de bois ignifuge, lequel stratifié a un côté supérieur, un côté inférieur et une épaisseur d'au plus 0,9 mm, le procédé comprenant les étapes de:
- fournir un stratifié ayant une épaisseur d'au plus 0,9 mm comprenant:
- une couche de placage de bois, dans lequel la couche de placage de bois forme une couche supérieure du stratifié; et
- une couche de fond pour supporter la couche de placage de bois, dans lequel la couche de fond est fixée à la couche de placage de bois et dans lequel la couche de fond forme une couche inférieure du stratifié;
- fournir le stratifié à un poste d'imprégnation pour imprégner le stratifié;
- introduire le stratifié dans un poste d'imprégnation pour imprégner le stratifié ; et
- imprégner le stratifié d'un agent ignifuge depuis le côté supérieure et depuis le côté inférieur du stratifié.

2. Procédé selon la revendication 1, dans lequel le procédé comprend en outre une étape de plaquage d'une feuille d'un stratifié de placage de bois ignifuge obtenu sur un profilé métallique.

3. Procédé selon la revendication 1 ou 2, dans lequel la couche de placage de bois du stratifié comprend une seule tranche de placage de bois.

4. Procédé selon l'une quelconque des revendications 1 à 3, dans lequel le procédé comprend une étape de fourniture du stratifié de placage de bois en déroulant le stratifié de placage de bois à partir d'une bobine d'alimentation et en transportant ensuite le stratifié vers le poste d'imprégnation.

5. Procédé selon l'une quelconque des revendications 1 à 4, dans lequel le procédé comprend une première étape et une deuxième étape d'imprégnation, dans lequel le stratifié est inversé après la première étape d'imprégnation, dans laquelle première étape un premier côté du stratifié, c'est-à-dire le côté supérieur ou le côté inférieur, est imprégné et dans lequel le stratifié inversé est fourni dans la seconde étape pour imprégner le côté opposé du stratifié.

6. Procédé selon la revendication 5, dans lequel la première étape et la deuxième étape sont réalisées successivement sans étape intermédiaire de séchage.

7. Procédé selon la revendication 5 ou 6, dans lequel le stratifié est transporté dans la première étape et la deuxième étape vers un même poste d'imprégnation.

8. Procédé selon l'une quelconque des revendications précédentes, dans lequel l'agent ignifuge est appliqué au stratifié par un rouleau de pression pour presser l'agent ignifuge dans le stratifié de placage de bois.

9. Procédé selon l'une quelconque des revendications précédentes, dans lequel un stratifié imprégné obtenu est ensuite traité par une étape de séchage et/ou de vernissage.

10. Stratifié de placage de bois obtenu en mettant en œuvre le procédé selon l'une quelconque des revendications 1 à 9, dans lequel le stratifié a un côté supérieur, un côté inférieur et une épaisseur d'au plus 0,9 mm, dans lequel le stratifié comprend:
- une couche de placage de bois, dans lequel la couche de placage de bois forme une couche supérieure du stratifié; et
- une couche de fond pour supporter la couche de placage de bois, dans lequel la couche de fond est fixée à la couche de placage de bois par un processus de laminage, dans lequel la couche de fond forme une couche inférieure du stratifié,
dans lequel les deux côté supérieur et inférieur du stratifié sont imprégnés d'un agent ignifuge après le processus de lamination.

11. Stratifié de placage de bois selon la revendication 10, dans lequel le stratifié de placage de bois comprend une couche de placage de bois constituée d'une seule tranche de placage de bois, qui a en particulier une épaisseur d'au plus 0,6 mm.

12. Stratifié de placage de bois selon la revendication 10 ou 11, dans lequel le stratifié de placage de bois est produit avec des matériaux biodégradables, dans lequel la couche de fond comprend une fibre naturelle choisie dans un groupe constitué de jute, chanvre, coton, fibre de coco ou toute combinaison de ceux-ci.

13. Profilé métallique plaqué pourvu d'un stratifié de placage de bois selon l'une quelconque des revendications 9 à 12.

14. Système d'imprégnation pour mettre en œuvre le procédé des revendications 1 à 9 pour imprégner un stratifié de placage de bois d'une épaisseur d'au plus 0,9 mm comprenant:
- un poste d'alimentation comprenant une bobine d'alimentation pour fournir le stratifié de placage de bois;
- un transporteur comprenant une suspension pour transporter un stratifié de placage de bois fourni;
- un poste d'imprégnation comprenant un bain d'imprégnation pour imprégner le stratifié de placage de bois transporté par la suspension, dans lequel la suspension comprend au moins une première et une seconde poulie pour immerger et guider le stratifié à travers le bain d'imprégnation, de telle sorte que les deux côté supérieur et inférieur du stratifié soient simultanément imprégnés;
- un poste de stockage pour stocker le stratifié imprégné comprenant une bobine de stockage pour enrouler un stratifié de placage de bois imprégné provenant du poste d'imprégnation,
dans lequel le transporteur comprend un guidage en serpentin comprenant un réseau supérieur et un réseau inférieur de poulies pour guider le stratifié, dans lequel le stratifié s'étend alternativement d'une poulie du réseau supérieur à une poulie du réseau inférieur, de sorte que le stratifié soit plié plusieurs fois pendant l'imprégnation.
